# EUROPÄISCHE PATENTSCHRIFT

(11) **EP 2 221 223 B1**
(45) Veröffentlichungstag und Bekanntmachung des Hinweises auf die Patenterteilung: **02.11.2011**
(21) Anmeldenummer: 09002579.2
(22) Anmeldetag: 24.02.2009
(51) Int. Cl.: B60R 21/205

(54) **Luftsackmodul**
Airbag module
Module de coussin d'air

(43) Veröffentlichungstag der Anmeldung: 25.08.2010
(73) Patentinhaber: Delphi Technologies, Inc., Troy MI 48007 (US)
(72) Erfinder: Crohn, Detlef, 13158 Berlin (DE); Lutter, Gerhard, 16562 Bergfelde (DE)
(74) Vertreter: Denton, Michael John

(56) Entgegenhaltungen:
- WO-A-2005/100104
- DE-A1-102006 057 503
- US-A1- 2006 220 355

## Beschreibung

Die vorliegende Erfindung betrifft ein Luftsackmodul zur Aufnahme in einer Aussparung einer Armaturentafel gemäß dem Oberbegriff des Anspruchs 1, wie es aus der DE 10 2006 057 503 A1 bekannt geworden ist.

Derartige Luftsackmodule, welche dazu dienen, um im Crashfall den Aufprall beispielsweise des Beifahrers und insbesondere dessen Knie auf die Armaturentafel abzufedern und zu dämpfen, sind üblicherweise in einem allseits geschlossenen starren Gehäusekasten auf der dem Fahrgastraum abgewandten Seite der Armaturentafel angeordnet. Aufgrund der Unterbringung in solch einem steifen bzw. starren Gehäusekasten, muss auf der dem Fahrgastraum abgewandten Seite ausreichend Bauraum zur Aufnahme des Gehäusekastens vorgesehen werden. Insbesondere muss auf der dem Fahrgastraum abgewandten Seite der Armaturentafel ausreichend Platz zur Verfügung stehen, um den starren Gehäusekasten überhaupt während der Montage an seine Endposition bringen zu können, so dass insgesamt verhältnismäßig viel Raum auf der Rückseite der Armaturentafel nur für die Unterbringung des Luftsackmoduls verloren geht. Da derartige starre Luftsackgehäusekästen außerdem in unerwünschter Weise aufgrund ihrer im Wesentlichen allseits geschlossenen Ausbildung das Gesamtgewicht eines Kraftfahrzeugs erhöhen, erweisen sich derartige bekannte Luftsackmodule unter Verwendung starrer Gehäusekästen sowohl in kraftstoffwirtschaftlicher Hinsicht als auch in produktionswirtschaftlicher Hinsicht als unvorteilhaft.

Der Erfindung liegt daher die Aufgabe zugrunde, ein Luftsackmodul zur Aufnahme und Positionierung eines Luftsacks an einer Armaturentafel zu schaffen, mit dem zumindest einem der zuvor genannten Probleme begegnet werden kann.

Erfindungsgemäß wird daher ein Luftsackmodul vorgeschlagen, welches die Merkmale des Anspruchs 1 aufweist.

Das erfindungsgemäße Luftsackmodul weist eine aus einem Gewebematerial gefertigte schlauchartige Hülle zur Aufnahme eines gefalteten Luftsacks sowie eines zum Aufblasen des Luftsacks geeigneten Gasgenerators auf. Außerdem weist das Luftsackmodul eine in eine Öffnung der Armaturentafel einpassbare Luftsackaustrittsklappe auf, welche in Bezug auf die Luftsackaufnahmehülle in Ausdehnrichtung des Luftsacks positioniert und derart mit der Luftsackaufnahmehülle verbunden ist, dass Druckkräfte, die bei einer Aktivierung des Luftsacks infolge der Ausdehnung des sich expandierenden Luftsacks auf die Luftsackaustrittsklappe einwirken, zumindest teilweise in Form von Zugkräften auf die Luftsackaufnahmehülle übertragbar sind.

Dadurch, dass der Gasgenerator und insbesondere der gefaltete Luftsack von einer aus einem Gewebematerial gefertigten Hülle aufgenommen werden, kann das Luftsackmodul auch bei verhältnismäßig beengten Platzverhältnissen mühelos montiert und in seine Endposition während der Montage gebracht werden, da die Hülle anders als die bekannten starren Luftsackgehäusekästen während der Montage leicht zusammengedrückt und komprimiert werden kann. Darüber weist die aus einem Gewebematerial gefertigte schlauchartige Hülle des erfindungsgemäßen Luftsackmoduls ein geringeres Gewicht als ein vergleichbarer starrer Luftsackgehäusekasten auf, was sich aufgrund der erzielten Gewichtsersparnis in kraftstoffwirtschaftlicher Hinsicht als vorteilhaft erweist. Darüber hinaus erweist sich das erfindungsgemäße Luftsackmodul auch in produktionswirtschaftlicher Hinsicht als vorteilhaft, da das Gewebematerial, aus dem die schlauchartige Hülle gefertigt ist, weniger kostenintensiv ist als ein vergleichbarer starrer Gehäusekasten.

Insbesondere erweist sich das erfindungsgemäße Luftsackmodul jedoch in produktionswirtschaftlicher Hinsicht als vorteilhaft, da es ermöglicht, in nur einem Arbeitsschritt sowohl die Luftsackaufnahmehülle auf der dem Fahrgastraum abgewandten Seite der Armaturentafel zu positionieren und gleichzeitig die in der Armaturentafel ausgebildete Öffnung, durch die das Luftsackmodul in die Armaturentafel eingebracht wird, zu verschließen. Dies wird dadurch möglich, dass die Luftsackaustrittsklappe Bestandteil des Luftsackmoduls ist, so dass diese nicht in einem separaten Arbeitsschritt moniert werden muss.

Da es im Crashfall wichtig ist, dass der Luftsack, welcher durch den Gasgenerator aufgeblasen wird, eine Druckkraft ausschließlich auf die Luftsackaustrittsklappe aufbringt, damit diese gezielt entlang einer Sollbruchstelle aufreißen kann, ist es bei dem erfindungsgemäßen Luftsackmodul vorgesehen, dass die Luftsackaustrittsklappe derart mit der Luftsackaufnahmehülle verbunden ist, dass die auf sie einwirkenden Druckkräfte zumindest teilweise, vorzugsweise größtenteils in Form von Zugkräften auf die Luftsackaufnahmehülle übertragen werden können. Hierdurch kann sichergestellt werden, dass die Druckkräfte nicht etwa über die Luftsackaustrittsklappe an benachbarte Bereiche der Armaturentafel übertragen werden, was durch deren so hervorgerufene Verformung ein verspätetes und/oder unkontrolliertes Öffnen der Luftsackaustrittsklappe zur Folge haben könnte. Dadurch, dass die Luftsackaustrittsklappe jedoch derart mit der Luftsackaufnahmehülle verbunden ist, dass Druckkräfte, die bei der Aktivierung des Luftsackmoduls infolge der Ausdehnung des Luftsacks auf die Luftsackaustrittsklappe einwirken, in Form von Zugkräften auf die Luftsackaufnahmehülle übertragen werden, wird somit einer unkontrollierbaren Verformung der an die Luftsackaustrittsklappe angrenzenden Bereiche der Armaturentafel entgegengewirkt, womit ein stets gleich bleibendes, reproduzierbares und im Voraus berechenbares Öffnungsverhalten der Luftsackaustrittsklappe erreicht werden kann.

Vorteilhafte Ausführungsformen des erfindungsgemäßen Luftsackmoduls ergeben sich aus den Unteransprüchen, der folgenden Beschreibung sowie den Zeichnungen.

So ist es gemäß einer Ausführungsform vorgesehen, dass der von der Luftsackhülle aufnehmbare Gasgenerator derart gegen eine von der Armaturentafel verkleidete Querträgerstruktur verspannt ist, dass die Luftsackaufnahmehülle zwischen der Querträgerstruktur und dem Gasgenerator fixiert ist. Hierdurch kann sichergestellt werden, dass die auf die Luftsackaufnahmehülle übertragenen Zugkräfte, welche aus den während der Aktivierung des Luftsackmoduls auf die Luftsackaustrittsklappe einwirkenden Druckkräften resultieren, in die Querträgerstruktur abgeleitet werden können. Mit anderen Worten ist die Luftsackaustrittsklappe somit mittelbar über die Luftsackaufnahmehülle an der Querträgerstruktur rückverankert, so dass die auf sie einwirkenden Druckkräfte in Form von Zugkräften in die Querträgerstruktur abgeleitet werden können.

Gemäß einer weiteren Ausführungsform kann es sich in produktionswirtschaftlicher Hinsicht als vorteilhaft erweisen, die Luftsackaufnahmehülle durch einen Gewebeabschnitt des Luftsacks selbst zu bilden, so dass die Luftsackaufnahmehülle bereits während der Fertigung bzw. des Nähvorgangs des Luftsacks zusammen mit diesem gefertigt werden kann. So kann es sich beispielsweise bei der Luftsackaufnahmehülle um eine großzügig dimensionierte Gewebezugabe des Gewebematerials handeln, aus dem der Luftsack selbst gefertigt ist, so dass nach dem Nähvorgangs des Luftsacks derselbe in die Gewebezugabe eingeschlagen und mit dieser vernäht werden kann.

Gemäß einer besonders bevorzugten Ausführungsform weist die Luftsackaustrittsklappe auf der dem Fahrgastraum abgewandten Seite zumindest eine die Luftsackaufnahmehülle umgreifende Lasche auf, welche vorzugsweise einstückig mit der Luftsackaustrittsklappe verbunden und aus demselben Material wie diese, nämlich beispielsweise einem thermoplastischen Elastomer (TPE), gefertigt ist. Dadurch, dass die Lasche die Luftsackaufnahmehülle um- bzw. hintergreift, können über die Lasche in der erwünschten Weise die bei der Aktivierung des Luftsackmoduls infolge der Ausdehnung des Luftsacks auf die Luftsackaustrittsklappe einwirkenden Druckkräfte zumindest teilweise in Form von Zugkräften über die Lasche auf die Luftsackaufnahmehülle übertragen werden, welche ihrerseits die so aufgebrachten Lasten an die Querträgerstruktur weitergibt, an der diese angebracht ist. Im Falle, dass dabei die Lasche aus beispielsweise einem thermoplastischen Material gefertigt ist, lässt sich die Lasche optimal durch Erwärmung an die Kontur der Luftsackaufnahmehülle anpassen, so dass die in die Lasche eingetragenen Zugkräfte auf direktem Wege auf die Luftsackaufnahmehülle übertragen werden können.

Gemäß einer weiteren bevorzugten Ausführungsform kann jede der Laschen durch zwei von der Luftsackaustrittsklappe abstehende und voneinander in Querrichtung der Luftsackaufnahmehülle beabstandete Lappen gebildet werden, deren freie Enden sich mit dem jeweils anderen Lappen verbinden lassen, und zwar vorzugsweise mittels einer Knöpf-, Hack-oder Klettverschlussverbindung oder einer anderen lösbaren Verbindungstechnik. Alternativ dazu können die Lappen auch mittels einer unlösbaren Verbindungstechnik wie beispielsweise Nähen, Kleben oder Schweißen miteinander verbunden werden. Anders als bei einer in sich geschlossenen Lasche erlauben es diese Ausführungsformen, dass die einen gefalteten Luftsack sowie einen Gasgenerator aufnehmende Luftsackaufnahmehülle nicht entlang ihrer Längsrichtung in die Lasche hinein geschoben werden muss, was sich aufgrund der verhältnismäßig schlaffen Luftsackaufnahmehülle als problematisch erweisen kann. Vielmehr ermöglicht es diese Ausführungsform, bei der die Lasche durch zwei von der Luftsackaustrittsklappe abstehende und in Querrichtung der Luftsackaufnahmehülle voneinander beabstandete Lappen gebildet wird, die Luftsackaufnahmehülle zunächst zwischen den beiden Lappen angrenzend an die Luftsackaustrittsklappe zu positionieren, woraufhin die beiden Lappen übereinander geschlagen und an ihren freien Enden mit dem jeweils anderen Lappen unter Verwendung einer der zuvor genannten lösbaren oder unlösbaren Verbindungstechniken miteinander verbunden werden können.

Zwar kann sich die die Luftsackaufnahmehülle umgreifende Lasche im Wesentlichen über die gesamte Länge der Luftsackhülle hinweg erstrecken; gemäß einer weiteren Ausführungsform kann es jedoch ausreichend sein, anstatt einer sich über die gesamte Länge der Luftsackaufnahmehülle hinweg erstreckenden Lasche eine Vielzahl von die Luftsackaufnahmehülle umgreifenden Laschen vorzusehen, welche in Längsrichtung der Luftsackaufnahmehülle voneinander beabstandet sind. Die Luftsackaufnahmehülle und insbesondere die sich aus dieser heraus erstreckenden mechanischen und elektrischen Anschlüsse des in der Luftsackaufnahmehülle aufgenommenen Gasgenerators sind somit zu Montage- und Anschlusszwecken im Wesentlichen frei zugänglich, wodurch die Montage des erfindungsgemäßen Luftsackmoduls weiter erleichtert werden kann. Gemäß einer alternativen bevorzugten Ausführungsform weist die aus einem Gewebematerial gefertigte schlauchartige Luftsackaufnahmehülle zumindest zwei quer zur Längsrichtung der Luftsackaufnahmehülle voneinander beabstandete Gewebeabschnitte auf, welche dazu dienen, die bei der Aktivierung des Luftsackmoduls infolge der Ausdehnung des Luftsacks auf die Luftsackaustrittsklappe einwirkenden Druckkräfte zumindest teilweise, vorzugsweise größtenteils in Form von Zugkräften auf die Luftsackaufnahmehülle übertragen zu können. Anstelle die Luftsackaufnahmehülle wie die zuvor genannte(n) Lasche(n) voll umfänglich zu um- bzw. hintergreifen, leiten die in Rede stehenden Gewebeabschnitte die in sie eingeleiteten Zugkräfte direkt in die Luftsackaufnahmehülle ein, so dass diese von dort in die Querträgerstruktur abgeleitet werden können, wozu die Luftsackaufnahmehülle wie bei der zuvor erläuterten Ausführungsform zwischen der Querträgerstruktur und dem Gasgenerator fixiert sein kann.

Bei dieser alternativen bevorzugten Ausführungsform ist es gemäß einem vorteilhaften Aspekt vorgesehen, dass jeder der Gewebeabschnitte an seinem freien Ende eine Gewebeschlaufe ausbildet, in die ein die Gewebeschlaufe aufweitendes Profilelement eingeschoben werden kann, so dass jede der so aufgeweiteten Gewebeschlaufen in zweischenkeligen, im Querschnitt annähernd C-förmigen Klauen formschlüssig gehalten werden kann, welche an der dem Fahrgastraum abgewandten Seite entlang des Randes der die Aussparung der Armaturentafel freilegenden Öffnung oder entlang der Luftsackaustrittsklappe ausgebildet sind. Da die durch die Profilelemente aufgeweiteten Gewebeschlaufen formschlüssig durch die in Rede stehenden zweischenkeligen Klauen aufgenommen werden, ist die Luftsackaufnahmehülle fest mit der Armaturentafel oder der Luftsackaustrittsklappe verbunden, je nachdem, in welchem dieser Bauteile die genannten zweischenkeligen Klauen vorgesehen sind.

Anstelle die zweischenkeligen Klauen durchgehend über die gesamte Länge der Luftsackaufnahmehülle hinwegzuführen, kann auch eine Vielzahl von in Längsrichtung der Luftsackaufnahmehülle voneinander beabstandeten zweischenkligen Klauen entlang des Randes der die Aussparung der Armaturentafel freilegenden Öffnung oder entlang der Luftsackaustrittsklappe ausgebildet sein. Diese Ausführungsform ermöglicht es, dass mehrere kurze Profilelemente zum Einsatz kommen können, um die jeweilige Gewebeschlaufe in der ihr zugeordneten Klaue zu sichern, wodurch die Einschubwege der Profilelemente reduziert werden können. Die mehreren kurzen Profilelemente können dabei gemäß einer weiteren Ausführungform untereinander beispielsweise über dünnere Verbindungsabschnitte gekoppelt sein, wodurch eine Art segmentierte Stange oder segmentiertes Seil entsteht, wobei die einzelnen Segmente durch die einzelnen Profilelemente gebildet werden.

Anstelle der genannten zweischenkeligen Klauen zur Sicherung der Luftsackaufnahmehülle über deren Gewebeschlaufen an der Armaturentafel oder der Luftsackaustrittsklappe können an der dem Fahrgastraum abgewandten Seite entlang des Randes der die Aussparung der Armaturentafel freilegenden Öffnung oder entlang der Luftsackaustrittsklappe auch beispielsweise J-förmige Haken ausgebildet sein, welche beabstandet und vorzugsweise um 180° gedreht zueinander angeordnet sind. Bei dieser Ausführungsform ist es jedoch erforderlich, dass auch die jeweilige Gewebeschlaufe in Längsrichtung zueinander beabstandete Unterbrechungen aufweist, im Bereich derer das von den Gewebeschlaufen aufgenommene Profilelement von dem J-förmigen Haken hinter- bzw. umgriffen werden kann. Die um 180° gedrehte Anordnung der J-förmigen Haken erweist sich dabei dahingehend als vorteilhaft, dass dadurch das Profilelement und damit die Luftsackaufnahmehülle verliersicher an der Armaturentafel oder der Luftsackaustrittsklappe gesichert werden können.

Um zu verhindern, dass sich die Luftsackaustrittsklappe während des laufenden Fahrbetriebs aus der in der Armaturentafel ausgebildeten Aussparung lösen kann, kann die Luftsackaustrittsklappe eine Vielzahl von elastisch verformbaren Rasthaken aufweisen, über die sie an dem Öff nungsrand der Aussparung der Armaturentafel verrastet werden kann. Besonders bevorzugt ist es dabei, dass die zuvor genannten Klauen oder Haken derart in Bezug auf die Rasthaken positioniert sind, dass eine Verformung der an dem Öffnungsrand der Aussparung der Armaturentafel eingerasteten Rasthaken durch die von den Klauen bzw. Haken aufgenommenen Profilelemente verhindert wird. Die Klauen bzw. Haken können dabei wechselweise versetzt zu den Rasthaken angeordnet sein, so dass das durch die Klauen bzw. Haken durchlaufende Profilelement mit den Rasthaken in Anlage gelangt, um eine unerwünschte Verformung derselben zu verhindern.

Im Folgenden wird nun die Erfindung rein exemplarisch anhand zweier beispielhafter Ausführungsformen unter Bezugnahme auf die beigefügten Zeichnungen beschrieben, wobei:
- Fig. 1: eine Querschnittsdarstellung durch ein erfindungsge- mäßes Luftsackmodul gemäß einer ersten Ausfüh- rungsform zeigt;
- Fig. 2: eine Querschnittsdarstellung durch ein erfindungsge- mäßes Luftsackmodul gemäß einer zweiten Ausfüh- rungsform zeigt; und

- Fig. 3: eine perspektivische Darstellung des Bereichs zeigt, in dem die Luftsackaufnahmehülle mit der Armaturenta- fel bei der zweiten Ausführungsform verbunden ist.

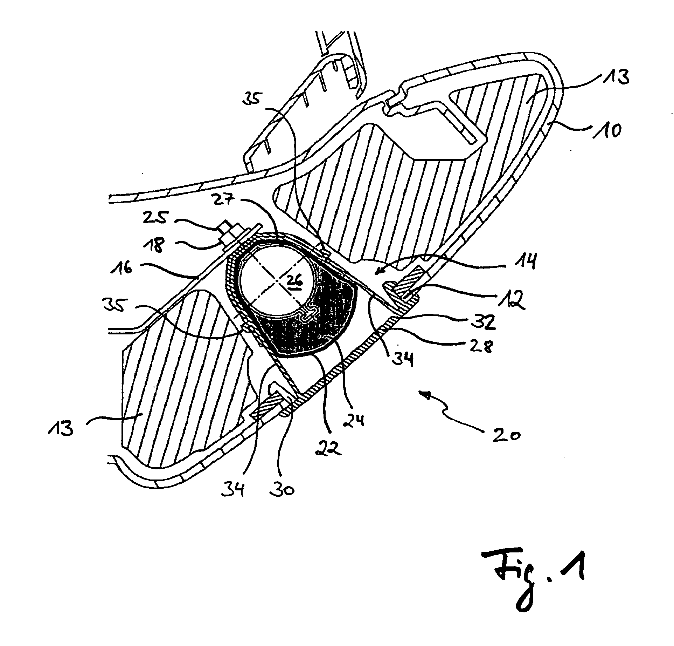

Die Fig. 1 zeigt die Einbausituation eines Luftsackmoduls 20 gemäß einer ersten Ausführungsform in einer den Knien eines Beifahrers zugewandten Armaturentafel 10, welche in der hier dargestellten Ausführungsform eine leicht konvexe, schräg nach unten gerichtete Oberfläche aufweist. Innerhalb der Armaturentafel 10 sind zwei Energieabsorptionspolster 13 angeordnet, welche um ein gewisses Maß voneinander beabstandet sind, wodurch in der Armaturentafel 10 eine Aussparung 14 zur Aufnahme des Luftsackmoduls 20 gebildet wird, welches über eine Schraubbefestigung 18, 25 an einem von der Armaturentafel 10 verkleideten abgewinkelten Querträgerblech 16 angebracht ist.

In der hier dargestellten Ausführungsform weist das Luftsackmodul 20 eine schlauchartige, sich in Fahrzeugquerrichtung erstreckende Hülle 22 auf, welche aus einem Gewebematerial gefertigt ist und einen stabförmigen Gasgenerator 26 sowie einen nur schematisch dargestellten gefalteten Luftsack 24 aufnimmt, welcher im Crashfall von dem Gasgenerator 26 aufblasbar ist. Der Gasgenerator 26 ist von zumindest einer Ringschelle 27 umgeben, mit der zum einen der Luftsack 24 an dem Gasgenerator 26 befestigt ist, und welche andererseits zur Befestigung des Gasgenerators 26 an dem Querträgerblech 16 dient. Hierzu weist die Schelle 27 einen radial abstehenden Gewindestift 25 auf, welcher sich durch eine Öffnung in der Luftsackaufnahmehülle 22 und durch das Querträgerblech 16 hindurch erstreckt, so dass der Gasgenerator 26 einschließlich des Luftsacks 24 und der den Luftsack 24 sowie den Gasgenerator 26 umgebenden Luftsackaufnahmehülle 22 durch eine auf den Gewindestift 25 aufgeschraubte Mutter 18 an dem Querträgerblech 16 gesichert ist.

Zusätzlich zu der Luftsackaufnahmehülle 22 weist das erfindungsgemäße Luftsackmodul 20 eine Luftsackaustrittsklappe 28 auf, welche mit an ihrer dem Fahrgastraum abgewandten Seite ausgebildeten Rasthaken 30 entlang des Randes der die Aussparung 14 freilegenden Öffnung 12 mit der Armaturentafel 10 verrastet werden kann. Die Luftsackaustrittsklappe 28 weist auf ihrer dem Fahrgastraum abgewandten Seite eine Sollbruchstelle 32 in Form einer in Querrichtung des Fahrzeugs verlaufenden Kerbe 32 auf und ist so in Bezug auf die Luftsackaufnahmehülle 22 positioniert, dass der sich im Crashfall ausdehnende Luftsack 24 von innen gegen die Luftsackaustrittsklappe 28 drückt, so dass diese mit zunehmender Ausdehnung des Luftsacks 24 entlang der Sollbruchstelle 32 aufreißen kann, damit der sich ausdehnende Luftsack 24 zum Schutz der Knie des Beifahrers in den Fahrgastraum eintreten kann.

Wenn jedoch während der anfänglichen Ausdehnung des Luftsacks 24 derselbe von innen gegen die Luftsackaustrittsklappe 28 drückt, besteht die Möglichkeit, dass die so aufgebrachte Druckkraft über die Rasthaken 30 in die angrenzenden Bereiche der Armaturentafel 10 übertragen wird, was dazu führen kann, dass aufgrund des so verteilten Drucks, der von dem Luftsack 24 ausgeübt wird, die Sollbruchstelle 32 nicht oder nur zeitverzögert aufreist. Um ein vorhersagbares, reproduzierbares und berechenbares Öffnungsverhalten der Luftsackaustrittsklappe 28 zu gewährleisten, wird erfindungsgemäß daher vorgeschlagen, die Luftsackaustrittsklappe 28 derart mit der Luftsackaufnahmehülle 22 zu verbinden, dass die auf die Luftsackaustrittsklappe 28 einwirkenden Druckkräfte, die bei der Aktivierung des Luftsackmoduls 20 infolge der Ausdehnung des Luftsacks 24 auf die Luftsackaustrittsklappe 28 einwirken, zumindest teilweise, vorzugsweise größtenteils in Form von Zugkräften auf die Luftsackaufnahmehülle 22 übertragen werden können. Die Luftsackaustrittsklappe 28 ist somit gewissermaßen über die Luftsackaufnahmehülle 22 an dem Querträger 16 rückverankert, da die Luftsackaufnahmehülle 22 zusammen mit dem Gasgenerator 26 an dem Querträger 16 in der zuvor erläuterten Weise fixiert ist.

Diese Rückverankerung erfolgt bei der in der Fig. 1 dargestellten Ausführungsform mittels einer die Luftsackaufnahmehülle 22 um- bzw. hintergreifenden Lasche, welche einstückig mit der Luftsackaustrittsklappe 28 verbunden und aus demselben Material wie diese, beispielsweise einem thermoplastischen Elastomer (TPE), gefertigt ist. Die Lasche wird dabei durch zwei von der dem Fahrgastraum abgewandten Seite der Luftsackaustrittsklappe 28 abstehende und voneinander beabstandete Lappen 34 gebildet, deren freie Enden übereinander geschlagen und miteinander verbunden sind, was in der hier dargestellten Ausführungsform durch zwei an dem innen liegenden Lappen 34 ausgebildete Haken 35 erreicht wird, welche in entsprechenden Öffnungen des außen liegenden Lappens 34 verhakt sind.

In der hier dargestellten Ausführungsform erstrecken sich die beiden Lappen 34 bzw. die durch diese gebildete Lasche im Wesentlichen über die gesamte Länge der Luftsackaufnahmehülle 22; gemäß einer alternativen Ausführungsform können jedoch auch eine Vielzahl von die Luftsackaufnahmehülle 22 umgreifenden Laschen vorgesehen sein, welche in Längsrichtung der Luftsackaufnahmehülle 22 voneinander beabstandet sind.

Wenn nun bei der Aktivierung des Luftsackmoduls 20 durch den sich ausdehnenden Luftsack 24 Druckkräfte auf die Luftsackaustrittsklappe 28 aufgebracht werden, besteht nicht die Gefahr, dass diese Kräfte in den Randbereich der Öffnung 12 in der Armaturentafel 10 eingeleitet werden, wodurch diese sich in Richtung des Fahrgastraums vor dem Öffnen der Luftsackaustrittsklappe 28 verformen könnte. Vielmehr wird einer derartigen Formung des Randbereichs der Öffnung 12 durch die erfindungsgemäße Rückverankerung der Luftsackaustrittsklappe 28 über die durch die Lappen 34 gebildeten Laschen an der Luftsackaufnahmehülle 22 entgegengewirkt, womit ein voraussagbares, reproduzierbares und berechenbares Öffnungsverhalten der Luftsackaustrittsklappe 28 gewährleistet werden kann.

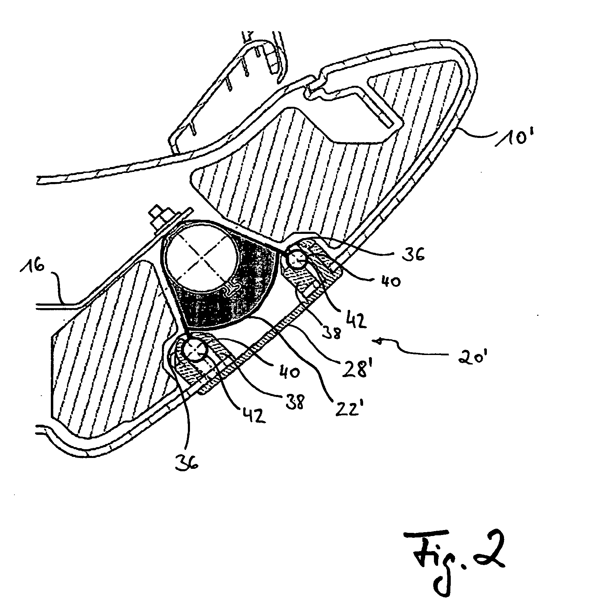

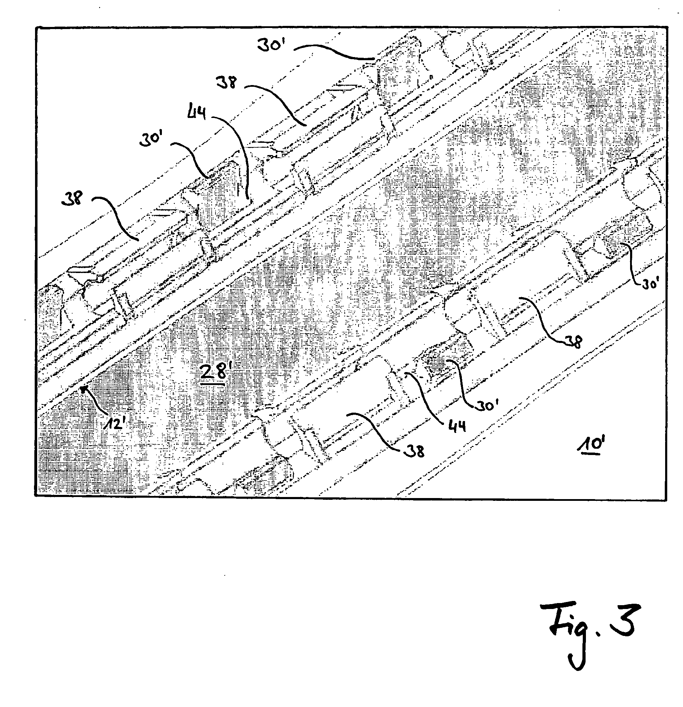

Unter Bezugnahme auf die Fig. 2 und 3 wird nun eine zweite, alternative Ausführungsform eines erfindungsgemäßen Luftsackmoduls beschrieben. In der Fig. 2 stimmt der grundsätzliche Aufbau der Armaturentafel 10' im Wesentlichen mit dem der Fig. 1 überein, so dass diesbezüglich auf die entsprechenden Erläuterungen zur Fig. 1 verwiesen werden kann.

Im Unterschied zu der in der Fig. 1 dargestellten Ausführungsform erfolgt bei dem in der Fig. 2 dargestellten Luftsackmodul 20' die Rückverankerung der Luftsackaustrittsklappe 28' jedoch nicht über die Luftsackaufnahmehülle 22' voll umfänglich umgreifende Laschen. Vielmehr ist es bei der in der Fig. 2 dargestellten Ausführungsform vorgesehen, dass an der aus einem Gewebematerial gefertigten schlauchartigen Luftsackaufnahmehülle 22' zumindest zwei quer zur Längsrichtung der Luftsackaufnahmehülle 22' voneinander beabstandete Gewebeabschnitte 36 vorgesehen sind, über die die gewünschte Rückverankerung erfolgt. Die Gewebeabschnitte 36 können dabei beispielsweise an die Luftsackaufnahmehülle 22' angenäht oder einstückig mit dieser ausgebildet sein. Die Gewebeabschnitte 36 sind dabei in der hier dargestellten Ausführungsform direkt mit dem Randbereich der in der Armaturentafel 10' ausgebildeten Öffnung 12' befestigt, wie dies im Folgenden noch detailliert erläutert wird. Während der Aktivierung des Luftsackmoduls 20' auf die Luftsackaustrittsklappe 28' einwirkende Druckkräfte werden somit über die Gewebeabschnitte 36 in Form von Zugkräften in die Luftsackaufnahmehülle 22' und von dort in das Querträgerblech 16 übertragen, wodurch effektiv verhindert werden kann, dass sich der Randbereich der Öffnung 12' der Armaturentafel 10' unerwünscht in Richtung des Fahrgastraums während der Aktivierung des Luftsackmoduls 20' verformen kann.

Zur Befestigung der Gewebelaschen 36 entlang des Randbereichs der Öffnung 12' sind entlang des Randbereichs beabstandet zueinander mehrere zweischenkelige Klauen 38 vorgesehen, welche im Querschnitt betrachtet eine im Wesentlichen C-förmige Gestalt aufweisen (siehe Fig. 3). Zur Fixierung der Gewebelaschen 36 in den zweischenkeligen Klauen 38 ist am freien Ende jedes Gewebeabschnitts 36 eine Gewebeschlaufe 40 ausgebildet, in die ein die Gewebeschlaufe 40 aufweitendes Profilelement 42 wie beispielsweise eine rohrförmige Stange eingeschoben werden kann. Hierzu sind zunächst die Gewebeschlaufen 40 innerhalb der durch die zweischenkeligen Klauen 38 gebildeten Aufnahmen anzuordnen, so dass durch das anschließend in die Gewebeschlaufen 40 eingeschobene Profilelement 42 die Gewebeschlaufen 40 aufgeweitet und somit formschlüssig in den zweischenkligen Klauen 38 gesichert sind, welche hierzu die durch die Profilelemente 42 aufgeweiteten Gewebeschlaufen 40 teilweise hintergreifen.

Wie der Fig. 3 entnommen werden kann, sind die zweischenkligen Klauen 38 in Fahrzeugquerrichtung beabstandet zueinander angeordnet, wobei im Bereich zwischen zwei zueinander benachbarten Klauen 38 im Randbereich der Armaturentafel 10' jeweils eine Rastöffnung 44 zur Aufnahme eines Rasthakens 30' der Luftsackaustrittsklappe 28' vorgesehen ist. Dadurch, dass sich das Profilelement 42 durch mehrere zueinander beabstandete zweischenkelige Klauen 38 hindurch erstreckt, werden durch das jeweilige Profilelement 42 die Rasthaken 30' unlösbar in den Rastöffnungen 44 gesichert, da durch das jeweilige Profilelement 42 eine den Rasteingriff der Rasthaken 30' freigebende Verformung der Rasthaken 30' verhindert wird.

Anstelle die Klauen 38 gemäß der in den Fig. 2 und 3 dargestellten Ausführungsform am Randbereich der Öffnung 12' der Armaturentafel 10' vorzusehen, ist es analog zu der ersten Ausführungsform der Fig. 1 ebenfalls möglich, die Gewebelaschen 36 direkt mit der Luftsackaustrittsklappe 28' zu verbinden, wozu die Klauen 38 an der dem Fahrgastraum abgewandten Seite der Luftsackaustrittsklappe 28' vorzusehen wären.

Das erfindungsgemäße Luftsackmodul erweist sich durch die erfindungsgemäße Rückverankerung dahingehend als vorteilhaft, dass dadurch ein vorhersagbares, reproduzierbares und berechenbares Öffnungsverhalten der Luftsackaustrittsklappe sichergestellt werden kann, wie dies zuvor im Detail erläutert wurde. Darüber hinaus lässt sich das erfindungsgemäße Luftsackmodul auch bei sehr beengten Platzverhältnissen montieren, was auf den leicht verformbaren Charakter der gewebeartigen Luftsackaufnahmehülle zurückzuführen ist.

### Bezugszeichenliste

- 10, 10': Armaturentafel
- 12, 12': Öffnung in 10 bzw. 10'
- 13: Polster
- 14, 14': Aussparung
- 16: Querträger
- 18: Mutter
- 20, 20': Luftsackmodul
- 22, 22': Luftsackaufnahmehülle
- 24, 24': Luftsack
- 25: Gewindestift
- 26: Gasgenerator
- 27: Schelle
- 28, 28': Luftsackaustrittsklappe
- 30, 30': Rasthaken
- 32, 32': Sollbruchstelle
- 34: Lappen
- 35: Haken an 34
- 36: Gewebeabschnitt
- 38: zweischenkelige Klaue
- 40: Gewebeschlaufe
- 42: Profilelement
- 44: Rastöffnung

## Patentansprüche

1. Luftsackmodul (20, 20') zur Aufnahme in einer Aussparung (14, 14') einer Armaturentafel (10, 10') zum Schutz eines Fahrzeuginsassen bei einem Frontalaufprall, umfassend:
- eine aus einem Gewebematerial gefertigte schlauchartige Hülle (22, 22') zur Aufnahme eines gefalteten Luftsacks (24, 24') sowie eines zum Aufblasen des Luftsacks (24, 24') geeigneten Gasgenerators (26); und
- eine in eine Öffnung (12, 12') einer Armaturentafel (10, 10') einpassbare Luftsackaustrittsklappe (28, 28'), welche in Bezug auf die Luftsackaufnahmehülle (22, 22') in Ausdehnrichtung des Luftsacks (24, 24') positioniert ist;
**dadurch gekennzeichnet, dass**
die Luftsackaustrittsklappe (28, 28')derart mit der Luftsackaufnahmehülle (22, 22') verbunden ist, dass Druckkräfte, die bei einer Aktivierung des Luftsackmoduls (20, 20') infolge der Ausdehnung des Luftsacks (24, 24') auf die Luftsackaustrittsklappe (28, 28') einwirken, zumindest teilweise in Form von Zugkräften auf die Luftsackaufnahmehülle (22, 22') übertragbar sind.

2. Luftsackmodul (20) nach Anspruch 1,
**dadurch gekennzeichnet, dass**
die Luftsackaustrittsklappe (28) auf der dem Fahrgastraum abgewandten Seite zumindest eine die Luftsackaufnahmehülle (22) umgreifende Lasche aufweist, welche vorzugsweise einstückig mit der Luftsackaustrittsklappe (28) verbunden und aus demselben Material wie diese, insbesondere einem thermoplastischen Elastomer, gefertigt ist.

3. Luftsackmodul (20) nach Anspruch 2,
**dadurch gekennzeichnet, dass**
jede Lasche durch zwei von der Luftsackaustrittsklappe (28) abstehende und voneinander beabstandete Lappen (34) gebildet wird, deren freie Enden mit dem jeweils anderen Lappen (34) verbunden sind, und zwar vorzugsweise mittels einer Knöpf-, Hak- (35), oder Klettverschlussverbindung oder einer anderen lösbaren Verbindungstechnik oder einer unlösbaren Verbindungstechnik wie beispielsweise Nähen, Kleben, Schweißen.

4. Luftsackmodul (20) nach Anspruch 2 oder 3,
**dadurch gekennzeichnet, dass**
die Luftsackaustrittsklappe (28) auf der dem Fahrgastraum abgewandten Seite eine Vielzahl von die Luftsackaufnahmehülle (22) umgreifenden Laschen aufweist, welche in Längsrichtung der Luftsackaufnahmehülle (22) voneinander beabstandet sind.

5. Luftsackmodul (20') nach Anspruch 1,
**dadurch gekennzeichnet, dass**
die aus einem Gewebematerial gefertigte schlauchartige Luftsackaufnahmehülle (22') zumindest zwei quer zur Längsrichtung der Luftsackaufnahmehülle (22') voneinander beabstandete Gewebeabschnitte (36) aufweist, über die die bei einer Aktivierung des Luftsackmoduls (20') infolge der Ausdehnung des Luftsacks (24') auf die Luftsackaustrittsklappe (28') einwirkenden Druckkräfte zumindest teilweise in Form von Zugkräften auf die Luftsackaufnahmehülle (22') übertragbar sind.

6. Luftsackmodul (20') nach Anspruch 5,
**dadurch gekennzeichnet, dass**
jeder der Gewebeabschnitte (36) an seinem freien Ende eine Gewebeschlaufe (40) ausbildet, in die ein die Gewebeschlaufe (40) aufweitendes Profilelement (42) eingeschoben ist, wobei jede der so aufgeweiteten Gewebeschlaufen (40) in zweischenkeligen Klauen (38) formschlüssig aufnehmbar ist, welche an der dem Fahrgastraum abgewandten Seite entlang des Randes der die Aussparung (14') der Armaturentafel (10') freilegenden Öffnung (12') oder entlang der Luftsackaustrittsklappe (28') ausgebildet sind.

7. Luftsackmodul (20') nach Anspruch 6,
**dadurch gekennzeichnet, dass**
in Längsrichtung der Luftsackaufnahmehülle (22') eine Vielzahl von voneinander beabstandeten zweischenkeligen Klauen (38) entlang des Öffnungsrandes in der Armaturentafel (10') oder der Luftsackaustrittsklappe (28') ausgebildet sind.

8. Luftsackmodul (20') nach Anspruch 6 oder 7,
**dadurch gekennzeichnet, dass**
die Luftsackaustrittsklappe (28') eine Vielzahl von elastisch verformbaren Rasthaken (30) aufweist, über die die Luftsackaustrittsklappe (28') an dem Öffnungsrand der Armaturentafel (10') verrastbar ist, wobei die zweischenkeligen Klauen (38) derart in Bezug auf die Rasthaken (30) positioniert sind, dass eine Verformung der an dem Öffnungsrand der Armaturentafel (10') eingerasteten Rasthaken (30) durch die von den Klauen (30) aufgenommenen Profilelemente (42) verhindert wird.

9. Luftsackmodul (20, 20') nach zumindest einem der vorstehenden Ansprüche,
**dadurch gekennzeichnet, dass**
die Luftsackaufnahmehülle (22, 22') durch einen Gewebeabschnitt des Luftsacks (24, 24') selbst gebildet wird.

10. Luftsackmodul (20, 20') nach Anspruch 1,
**dadurch gekennzeichnet, dass**
der Gasgenerator (26) derart mit einer von der Armaturentafel (10, 10') verkleideten Querträgerstruktur (16) verspannt ist, dass die Luftsackaufnahmehülle (22, 22') zwischen der Querträgerstruktur (16) und dem Gasgenerator (26) fixiert ist.

## Claims

1. Air bag module (20, 20') for reception in a recess (14, 14') of an instrument panel (10, 10') to protect a vehicle occupant during a frontal collision, comprising:
- a tubular enclosure (22, 22') made of fabric material for receiving a folded air bag (24, 24') and a gas generator (26) suitable for inflating the air bag (24, 24'); and
- an air bag outlet flap (28, 28') fitable into an opening (12, 12') of an instrument panel (10, 10'), which is positioned with respect to the air bag receiving enclosure (22, 22') in an expanding direction of the airbag (24, 24'); **characterized in that**
the air bag outlet flap (28, 28') is connected to the air bag receiving enclosure (22, 22') such that compressive forces, which act upon the air bag outlet flap (28, 28') during activation of the air bag module (20, 20') due to expansion of the air bag (24, 24'), are transferable at least in part in the form of traction forces to the air bag receiving enclosure (22, 22').

2. Air bag module (20) according to claim 1,
**characterized in that**
the air bag outlet flap (28), on the side facing away from the passenger compartment, comprises at least one bracket encompassing the air bag receiving enclosure (22) which is preferably integrally connected with the air bag outlet flap (28) and made of the same material as that, in particular a thermoplastic elastomere.

3. Air bag module (20) according to claim 2,
**characterized in that**
each bracket is made of two lobes (34) protruding from the air bag outlet flap (28) and spaced from one another, whose free ends are connected with the respective other lobe (34), preferably via a button, hook (35), or Velcro connection or other releasable connection technology or unreleasable connection technology, such as sewing, gluing, welding.

4. Air bag module (20) according to claim 2 or 3,
**characterized in that**
the air outlet flap bag (28), on the side facing away from the passenger compartment, comprises a plurality of brackets encompassing the air bag receiving enclosure (22) which are spaced apart in longitudinal direction of the air bag receiving enclosure (22).

5. Air bag module (20') according to claim 1,
**characterized in that**
the tubular air bag receiving enclosure (22') made of fabric material comprises at least two fabric sections (36) spaced from one another transversely to the longitudinal direction of the air bag receiving enclosure (22'), through which compressive forces, which act upon the air bag outlet flap (28') during activation of the air bag module (20') due to expansion of the air bag (24'), are transferable at least in part in the form of traction forces to the air bag receiving enclosure (22').

6. Air bag module (20') according to claim 5,
**characterized in that**
each of the fabric sections (36) has a fabric loop (40) at its free end, into which a profile element (42) expanding the fabric loop (40) is inserted, wherein each of the thus expanded fabric loops (40) can be form-fittingly accommodated in two-legged clutches (38) which are arranged on the side facing away from the passenger compartment along the edge of the opening (12') exposing the recess (14') of the instrument panel (10') or along the air bag outlet flap (28').

7. Air bag module (20') according to claim 6,
**characterized in that**
a plurality of spaced apart two-legged clutches (38) are arranged in longitudinal direction of the air bag receiving enclosure (22') along the opening edge in the instrument panel (10') or the air bag outlet flap (28').

8. Air bag module (20') according to claim 6 or 7,
**characterized in that**
the air bag outlet flap (28') comprises a plurality of elastically deformable locking hooks (30), over which the air bag outlet flap (28') can be locked at the opening edge of the instrument panel (10'), wherein the two-legged clutches (38) are positioned with regard to the locking hooks (30) such that a deformation of the locking hooks (30), locked at the opening edge of the instrument panel (10'), through the profile elements (42) received by the clutches (30) is prevented.

9. Air bag module (20, 20') according to at least one of the preceding claims,
**characterized in that**
the air bag receiving enclosure (22, 22') is formed of a fabric section of the airbag (24, 24') itself.

10. Air bag module (20, 20') according to claim 1,
**characterized in that**
the gas generator (26) is tensioned with a cross beam structure (16) clad by the instrument panel (10, 10') such that the air bag receiving enclosure (22, 22') is fixed between the cross beam structure (16) and the gas generator (26).

## Revendications

1. Module de coussin gonflable (20, 20') destiné à être reçu dans un évidement (14, 14') d'un panneau de tableau de bord (10, 10') pour la protection d'un passager de véhicule lors d'une collision frontale, comprenant :
- une enveloppe (22, 22') semblable à un tuyau, réalisée en un matériau textile, pour recevoir un coussin gonflable (24, 24') plié ainsi qu'un générateur de gaz (26) approprié pour gonfler le coussin gonflable (24, 24') ; et
- un clapet de sortie de coussin (28, 28'), ajustable dans une ouverture (12, 12') d'un panneau de tableau de bord (10, 10'), qui est positionné, par référence à l'enveloppe de réception (22, 22') pour le coussin gonflable, dans la direction d'extension du coussin gonflable (24, 24') ;
**caractérisé en ce que**
le clapet de sortie de coussin (28, 28') est relié à l'enveloppe de réception (22, 22') pour le coussin gonflable de telle façon que les forces de pression, qui agissent sur le clapet de sortie de coussin (28, 28') lors d'une activation du module de coussin gonflable (20, 20') à la suite de l'extension du coussin gonflable (24, 24'), peuvent être transmises au moins partiellement à l'enveloppe de réception (22, 22') du coussin gonflable sous la forme de forces de traction.

2. Module de coussin gonflable (20) selon la revendication 1,
**caractérisé en ce que** le clapet de sortie de coussin (28) comporte, sur le côté détourné de l'habitacle, au moins une patte qui entoure l'enveloppe de réception (22) pour le coussin gonflable, laquelle est de préférence reliée d'un seul tenant avec le clapet de sortie de coussin (28) et est fabriquée du même matériau que celui-ci, en particulier en élastomère thermoplastique.

3. Module de coussin gonflable (20) selon la revendication 2,
**caractérisé en ce que** chaque patte est formée par deux volets (34) dépassant du clapet de sortie de coussin (28) et écartés l'un de l'autre, dont les extrémités libres sont reliées à l'autre volet respectif (34), et ceci de préférence au moyen d'une liaison à bouton, à crochet (35) ou à fermeture agrippante, ou par une autre technique de liaison détachable, ou encore par une technique liaison non détachable comme par exemple couture, collage, soudage.

4. Module de coussin gonflable (20) selon la revendication 2 ou 3,
**caractérisé en ce que** le clapet de sortie de coussin (28) comporte, sur le côté détourné de l'habitacle, une pluralité de pattes qui entourent l'enveloppe de réception (22) pour le coussin gonflable, lesquelles sont écartées les unes des autres en direction longitudinale de l'enveloppe de réception (22) pour le coussin gonflable.

5. Module de coussin gonflable (20') selon la revendication 1,
**caractérisé en ce que** l'enveloppe de réception (22'), semblable à un tuyau et fabriquée en un matériau textile, pour le coussin gonflable, comprend au moins deux tronçons de textile (36) écartés l'un de l'autre transversalement à la direction longitudinale de l'enveloppe de réception (22') pour le coussin gonflable, via lesquels les forces de pression qui agissent sur le clapet de sortie de coussin (28') lors d'une activation du module de coussin gonflable (20') à la suite de l'extension du coussin gonflable (24'), peuvent être transmises au moins partiellement à l'enveloppe de réception (22') pour le coussin gonflable sous la forme de forces de traction.

6. Module de coussin gonflable (20') selon la revendication 5,
**caractérisé en ce que** chacun des tronçons de textile (36) forme à son extrémité libre une boucle textile (40) dans laquelle est enfilé un élément profilé (42) qui élargit la boucle textile (40), et chacune des boucles textiles (40) ainsi élargies est susceptible d'être reçue en coopération de formes dans des griffes à deux bras (38), lesquelles sont réalisées, du côté détourné de l'habitacle, le long de la bordure de l'ouverture (12') qui dégage l'évidement (14') du panneau de tableau de bord (10') ou le long du clapet de sortie de coussin (28').

7. Module de coussin gonflable (20') selon la revendication 6,
**caractérisé en ce que**, en direction longitudinale de l'enveloppe de réception (22') pour le coussin gonflable, une pluralité de griffes à deux bras (38), écartées les unes des autres, sont réalisées le long de la bordure de l'ouverture dans le panneau de tableau de bord (10') ou dans le clapet de sortie de coussin (28').

8. Module de coussin gonflable (20') selon la revendication 6 ou 7,
**caractérisé en ce que** le clapet de sortie de coussin (28') comporte une pluralité de crochets d'enclenchement (30) élastiquement déformables, via lesquels le clapet de sortie de cousin (28') peut être enclenché sur la bordure de l'ouverture du panneau de tableau de bord (10'),
dans lequel les griffes à deux bras (38) sont positionnées, par référence aux crochets d'enclenchement (30), de telle façon qu'une déformation des crochets d'enclenchement (30), enclenchés au niveau de la bordure de l'ouverture du panneau de tableau de bord (10'), par les éléments profilés (42) reçus par les griffes (30) est empêchée.

9. Module de coussin gonflable (20, 20') selon l'une au moins des revendications précédentes,
**caractérisé en ce que** l'enveloppe de réception (22, 22') pour le coussin gonflable est formée par un tronçon de textile du coussin gonflable (24, 24') lui-même.

10. Module de coussin gonflable (20, 20') selon la revendication 1,
**caractérisé en ce que** le générateur de gaz (26) est enserré avec une structure porteuse transversale (16) habillée par le panneau de tableau de bord (10, 10') de telle façon que l'enveloppe de réception (22, 22') pour le coussin gonflable est fixée entre la structure porteuse transversale (16) et le générateur de gaz (26).
